# DEMANDE DE BREVET EUROPEEN

(11) **EP 1 300 975 A1**
(43) Date de publication de la demande: **09.04.2003**
(21) Numéro de dépôt: 02292364.3
(22) Date de dépôt: 26.09.2002
(51) Int. Cl.: H04J 14/02

(54) **Systeme de demultiplexage optique de bandes de longueurs d'ondes**

(30) Priorité: 27.09.2001 FR 0112448; 11.10.2001 FR 0113102
(71) Demandeur: ALCATEL, 75008 Paris (FR)
(72) Inventeur: Faure, Jean-Paul, 75014 Paris (FR); Bisson, Arnaud, 91400 Orsay (FR)
(74) Mandataire: Sciaux, Edmond

(57) **Abrégé**

Système de démultiplexage optique pour séparer des bandes de longueurs d'ondes adjacentes sans perte des canaux inter-bandes, et qui comprend un premier étage de filtrage (210) de relativement faible bande passante et de relativement grande sélectivité pour extraire l'ensemble des canaux inter-bandes. Le premier étage est suivi d'un second étage de filtrage (240) de relativement large bande passante et de relativement faible sélectivité pour extraire les bandes de longueurs d'ondes délivrées par le premier étage de filtrage. Un tel système permet d'utiliser les canaux inter-bandes, notamment pour la gestion du réseau et des bandes de longueur d'onde.

## Description

La présente invention concerne la technologie des transmissions par fibres optiques, par multiplexage à division spectrale, et concerne plus particulièrement un système permettant d'améliorer la séparation de bandes de longueurs d'onde dans un mode de transmission où un grand nombre de canaux ayant une même destination sont transportés respectivement par une suite de longueurs d'ondes distinctes, régulièrement réparties dans le spectre, toutes ces longueurs d'onde étant transportées sur une même fibre et constituant ce qu'on appelle une bande. Autrement dit, le spectre d'une bande a la forme d'un peigne de largeur finie, et avec des dents régulièrement espacées. Plusieurs bandes peuvent être entrelacées si l'espace spectral entre deux canaux successifs d'une bande est au moins égal à l'espace nécessaire pour un canal.

Dans les années récentes une énorme demande de bande passante a été suscitée par le déploiement des formes modernes de télécommunications en particulier l'Internet et son application principale, le WEB ('World Wide Web'), mais aussi de tous les réseaux privés d'entreprises et organismes divers, sans omettre les communications sans fil ('wireless'), en particulier le téléphone portable qui demande en pratique des infrastructures terrestres performantes pour ne pas décevoir l'attente des clients. Pour y faire face, les responsables de la mise en oeuvre des réseaux nécessaires au déploiement de ces nouvelles formes de communication ont rapidement dû avoir recours au transport des signaux porteurs de l'information sous forme optique pour bénéficier d'une part du faible coût des fibres elles-mêmes et d'autre part des très hauts débits qu'on peut atteindre malgré des distances de transmission qui peuvent se mesurer en kilomètres voire en dizaines et même en centaines de kilomètres, sans avoir besoin de régénérer le signal. L'atténuation étant en effet très faible, en particulier dans les fibres dites mono-modes, comparée à ce qui peut être obtenu avec une transmission électrique sur cuivre par exemple. Par ailleurs, une transmission optique évite tous les problèmes liés aux perturbations électromagnétiques qui nécessitent de coûteux circuits de protection et peuvent entraîner de fréquentes erreurs de transmission.

Une première étape dans l'utilisation des fibres optiques a consisté essentiellement en des liaisons point à point, entre deux noeuds d'un réseau. Dans cette première étape, le transport s'effectue sur une seule longueur d'onde, le plus souvent aux alentours 1550 nanomètres (nm), longueur d'onde la mieux adaptée pour un transport sur de grandes distances. Bien que les signaux optiques puissent être modulés jusqu'à de très hautes fréquences, qui doivent être exprimées en giga ou 10⁹ bits par seconde, la quantité d'information à transporter a rapidement excédé la capacité offerte. Si la fibre elle-même est peu onéreuse, son déploiement peut demander beaucoup de main d'oeuvre et s'avérer extrêmement coûteux. Plutôt que de déployer plus de fibres optiques, quand la capacité d'un réseau installé devient insuffisante, la solution a été trouvée dans une meilleure utilisation des fibres déjà en place. La technique dite WDM ('Wavelength Division Multiplexing') a permis, en transmettant des longueurs d'ondes différentes dans une même fibre, de multiplier le nombre de canaux de transmission, complètement indépendants, sur une même fibre physique. En d'autres termes, en transmettant des rayons lumineux de 'couleurs' différentes, la bande passante d'une simple fibre est multipliée d'autant. La technique dite DWDM (Dense WDM), qui a vite succédé à WDM, permet ainsi de multiplexer des centaines de canaux, voire plus.

Il a été démontré que le routage par groupe de longueurs d'onde ou bandes (par opposition au routage classique par longueur d'onde individuelle) conduit dans la plupart des cas à une réduction du coût global du réseau optique dans la mesure où il permet de partager le coût des dispositifs de filtrage et de commutation présents dans les noeuds, entre les différentes longueurs d'onde constituant la bande. En outre, parmi les différentes configuration de bandes susceptibles d'être utilisées pour le routage, les bandes de longueurs d'onde contiguës ou adjacentes présentent un avantage majeur sur les bandes de longueurs d'ondes entrelacées, en ce qu'elles utilisent des dispositifs de filtrage simplifiés, moins coûteux et également plus tolérants du point de vue des contraintes physiques qu'ils imposent (par opposition, les bandes entrelacées, nécessitent des dispositifs de filtrage affectant individuellement chaque longueur d'onde).

Ces fibres servent à interconnecter les équipements optiques de communication situés aux noeuds d'un réseau. Un dispositif essentiel à un noeud de réseau est alors un multiplexeur à insertion et extraction optique, ou OADM pour 'Optical Add/Drop Multiplexer'. Son but est, comme le nom le suggère, de pouvoir dériver ou dé-multiplexer et insérer ou multiplexer, en mode optique, le trafic local (par exemple, en un point d'entrée et de sortie d'un réseau secondaire) alors que le reste du trafic doit poursuivre son chemin vers d'autres noeuds du réseau. Cela suppose qu'au moins une longueur d'onde porteuse de l'information locale (un canal) doit être dérivée et insérée. En pratique, pour les raisons évoquées ci-dessus, ce sont plutôt des bandes de longueurs d'onde (une suite de canaux) qui doivent être ainsi dérivées et insérées pour échanger une quantité suffisante d'information avec des applications locales.

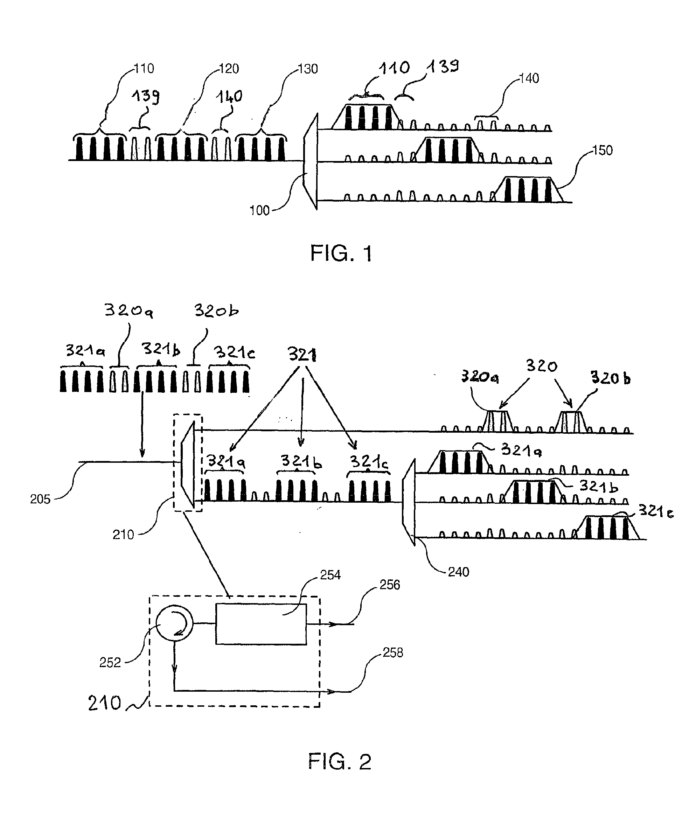

Ceci est illustré sur la **figure 1** qui représente un démultiplexeur optique ordinaire 100 extrayant séparément trois bandes de longueurs d'ondes d'un multiplex constitué d'une suite de canaux répartis à intervalles réguliers dans le spectre :
- Une bande 110 constituée de quatre canaux portés respectivement par un premier groupe de quatre longueurs d'onde.
- Une bande 120 constituée de quatre canaux portés respectivement par un deuxième groupe de quatre longueurs d'onde.
- Une bande 130 constituée de quatre canaux portés respectivement par un troisième groupe de quatre longueurs d'onde.

Les bandes 110 et 120 sont séparées par une bande 139 correspondant à deux canaux, mais qui n'est pas utilisée pour transmettre des signaux. Les bandes 120 et 130 sont séparées par une bande 140 correspondant à deux canaux, mais qui n'est pas utilisée pour transmettre des signaux. En effet, si on utilise des équipements ordinaires de démultiplexage de bandes, l'extraction des bandes 110, 120, 130 ne peut pas être effectuée sans devoir sacrifier des canaux dits inter-bandes qui sont entre les bandes 110 et 120, et entre les bandes 120 et 130. Ceci est dû à la grande proximité des longueurs d'onde contiguës qui peuvent être transportées avec le mode dit DWDM (impliquant des séparations spectrales entre canaux de 100 GHz, 50 GHz voire 25 GHz), et aux limitations inhérentes au pouvoir de discrimination spectral (appelé aussi sélectivité) des équipements ordinaires de démultiplexage de bandes, tel que le démultiplexeur 100.

Sur la figure 1, la bande passante du démultiplexeur ordinaire100 est illustrée par un trapèze 150 ayant des cotés dont la pente n'est pas suffisamment raide. Cette bande passante est assez large pour couvrir les canaux d'une bande de longueur d'ondes (quatre canaux dans cet exemple) mais a une sélectivité insuffisante pour éliminer efficacement les canaux inter-bandes constituant les bandes 139 et 140. Ces canaux inter-bandes ne peuvent donc pas être utilisés, ce qui réduit de façon significative les capacités de transport sur la fibre optique.

C'est pourquoi le but de l'invention est de fournir un système de démultiplexage optique permettant l'utilisation effective de ces longueurs d'ondes inter-bandes qui seraient autrement perdues.

L'objet de l'invention est donc un système de démultiplexage optique permettant de séparer une bande unique faisant partie d'un premier peigne de bandes qui est entrelacé avec au moins un second peigne de bandes, chaque bande étant constituées d'une pluralité de canaux ayant des longueurs d'ondes adjacentes ; caractérisé en ce qu'il comprend :
- un premier étage de démultiplexage spectral pour extraire séparément chacun des peignes ;
- et un second étage de démultiplexage spectral pour extraire séparément chacune des bande constituant un peigne extrait par le ledit premier étage de filtrage.

Le système selon l'invention permet d'utiliser tous les canaux et notamment les canaux appelés classiquement inter-bandes qu'on n'utilisait pas pour transmettre des signaux. Ces canaux deviennent utilisables notamment pour la gestion du réseau et des bandes de longueurs d'ondes, car le système selon l'invention permet d'obtenir une sélectivité suffisante, tout en ne comportant que des moyens simples et peu onéreux dans chacun des deux étages.

Les buts, objets, ainsi que les caractéristiques et avantages de l'invention ressortiront mieux de la description détaillée d'un mode préféré de réalisation de cette dernière. illustré par les dessins d'accompagnement dans lesquels :
La FIGURE 1, qui a été décrite ci-dessus, illustre un mode de transmission selon l'art antérieur, où un grand nombre de longueurs d'onde est transporté sur une même fibre optique mais où les canaux inter-bandes sont inexploitables.
La FIGURE 2 représente un premier mode de réalisation du système de démultiplexage optique selon l'invention.
La FIGURE 3 représente un second mode de réalisation du système de démultiplexage optique selon l'invention.

Dans l'exemple de réalisation représenté sur la **figure 2,** un multiplex 200 arrive sur une fibre 205. Il est constitué de canaux répartis à intervalles réguliers. Il est constitué de deux peignes entrelacés :
- d'un premier peigne de bandes, 321, constitué de trois bandes 321a, 321b, 321c constituées chacune de quatre canaux utilisés pour transmettre des signaux ;
- et d'un second peigne de bandes, 320, constitué de deux bandes 320a, 320b, constituées chacune de deux canaux, dits inter-bandes, qui sont utilisés aussi pour transmettre des signaux.
Le système comporte :
- un premier étage de démultiplexage spectral, à relativement faible bande passante et relativement grande sélectivité, ayant pour fonction principale d'extraire l'ensemble des canaux inter-bandes ;
- et un second étage de démultiplexage spectral, à relativement large bande passante et relativement faible sélectivité, pour séparer les bandes de longueurs d'onde restant après l'extraction de l'ensemble des canaux inter-bandes par le premier étage.
On sait réaliser facilement un premier étage ayant une grande sélectivité parce que les bandes de canaux inter-bandes ont de faibles largeurs. Le second étage peut être un démultiplexeur ordinaire, à faible sélectivité, grâce au fait qu'une première élimination très efficace des canaux inter-bandes a été faite par le premier étage.

Le premier étage est constitué d'un désentrelaceur périodique de bandes, 210, qui est destiné à séparer les deux peignes 320 et 321. Une première sortie du démultiplexeur 210 fournit le peigne 320 (bandes 320a et 320b) qui comprend tous les canaux inter-bandes. Ces canaux sont extraits mais restent multiplexés dans un même multiplex, dans ce premier exemple. Les deux bandes 320a et 320b peuvent être exploités pour transporter des signaux, mais pas séparément. Une seconde sortie du désentrelaceur 210 fournit le peigne 321 qui comprend tous les canaux servant à transporter l'information. Le désentrelaceur de bandes 210 est constitué de préférence d'un filtre périodique (ou une cascade de filtres périodiques) ayant une sélectivité suffisante pour atténuer efficacement les bandes 320a et 320b de canaux inter-bandes dans le multiplex (comportant les bandes 321a, 321b, 321c) fourni sur la seconde sortie.

Le second étage est constitué par un démultiplexeur périodique de bandes, 240. Il comporte trois sorties fournissant séparément les bandes 213a, 321 b, 321 c. Le démultiplexeur constituant le deuxième étage 240 peut être sans inconvénient un démultiplexeur ordinaire de bandes de longueurs d'onde contiguës, à faible sélectivité spectrale puisque les canaux inter-bandes (bandes 320a et 320b) ont été préalablement extraits avec une grande sélectivité par le premier étage 210.

La réalisation du désentrelaceur de l'étage 210 fait appel à des techniques connues de l'homme de l'art. Elle est cependant détaillée sur une partie agrandie de la figure 2. Il comporte un circulateur 252 ayant une entrée reliée à la fibre 205, et une première sortie reliée à un filtre optique périodique 254, par exemple un filtre dit Fabry-Pérot. Le pouvoir de séparation spectrale du filtre 254 doit être suffisant pour permettre l'extraction des bandes 320a, 320b de canaux inter-bandes. Ces bandes apparaissent sur la sortie 256 du filtre périodique 254. Une seconde sortie 258 du circulateur 252 constitue la seconde sortie du désentrelaceur 210, fournissant les bandes 321a, 321b, 321c. Il est à noter que le circulateur 252 étant un composant coûteux, on peut avantageusement le remplacer par un isolateur suivi d'un simple coupleur.

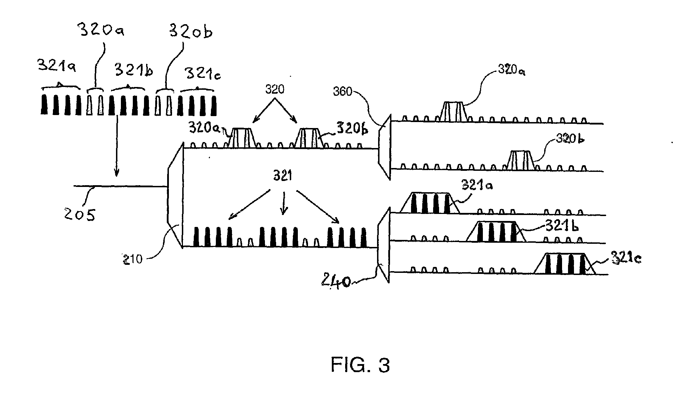

La **figure 3** reprend pour l'essentiel le contenu de la figure 2. Elle représente un système de démultiplexage pour le cas où les deux bandes de canaux inter-bandes, 320a et 320b, sont exploitées séparément. En plus des moyens du premier exemple de réalisation représenté sur la figure 2, ce second exemple de réalisation comporte un démultiplexeur périodique de bandes, 360, ayant une entrée reliée à la première sortie du désentrelaceur 210, et ayant deux sorties pour extraire séparément les bandes 320a et 320b qui sont utilisées elles aussi pour transporter des signaux.

De préférence chacun des démultiplexeur périodiques de bandes, 240 et 360, comprend un filtre périodique constitué de dépôts en couches minces.

Ainsi, l'invention permet que les canaux inter-bandes puissent être réutilisés alors qu'ils étaient habituellement inexploitables. Dans un mode préféré de réalisation de l'invention, ces canaux sont employés au contrôle du réseau lui-même transportant toutes les informations nécessaires à son bon fonctionnement et pour le maintenir à son niveau optimum de performance. Dans un mode de transport DWDM, basé sur les techniques de mélange de nombreuses longueurs d'ondes sur des fibres optiques interconnectant des stations OADM où des bandes de longueurs d'ondes doivent être dérivées localement et d'autres ajoutées, une gestion rigoureuse s'impose pour une utilisation efficace de celles-ci. Cette gestion nécessite un canal ou des canaux de contrôle qui utilisent avantageusement les longueurs d'ondes inter-bandes réutilisables par la mise en oeuvre de l'invention.

Enfin on notera que le nombre de canaux inter-bandes, qui est toujours montré comme étant de deux dans les figures 1 à 3 utilisées pour décrire l'art antérieur et l'invention, peut évidemment être différent de ce nombre et qu'il ne s'agit que d'un exemple particulier. Notamment, dans une mise en oeuvre préférée de l'invention on pourra limiter à un seul canal inter-bandes par le choix d'un démultiplexeur de bandes, 240, qui l'autorise parce que suffisamment sélectif, ou parce que le choix des longueurs d'ondes le permet en raison d'un espacement spectral suffisant. On peut alors obtenir une correspondance un pour un entre une bande de longueurs d'onde et l'un ou l'autre des canaux inter-bandes contiguës, qui peut être utilisé pour son contrôle.

## Revendications

1. Système de démultiplexage optique permettant de séparer une bande unique (321a) faisant partie d'un premier peigne de bandes (321) qui est entrelacé avec au moins un second peigne de bandes (320), chaque bande étant constituées d'une pluralité de canaux ayant des longueurs d'ondes adjacentes ; **caractérisé en ce qu'**il comprend :
- un premier étage de démultiplexage spectral (210) pour extraire séparément chacun des peignes (320, 321) ;
- et un second étage de démultiplexage spectral (240 ; 360) pour extraire séparément chacune des bande (321a, ...) constituant un peigne extrait par le ledit premier étage de filtrage.

2. Système de démultiplexage optique selon la revendication 1, **caractérisé en ce que** ledit premier étage de filtrage (210) comprend un filtre périodique incluant un circulateur (252) et un filtre périodique de type Fabry-Pérot (254).

3. Système de démultiplexage optique selon la revendication 1, **caractérisé en ce que** ledit second étage (240 ; 360) comprend un filtre périodique constitué de dépôts en couches minces.
